# EUROPEAN PATENT SPECIFICATION

(11) **EP 1 544 025 B1**
(45) Date of publication and mention of the grant of the patent: **27.12.2006**
(21) Application number: 04078223.7
(22) Date of filing: 26.11.2004
(51) Int. Cl.: B60N 2/02

(54) **Automatic adjusting apparatus for adjustable equipments**
Automatische Verstellvorrichtung für verstellbare Ausrüstungen.
Dispositif de réglage automatique pour équipements réglables.

(30) Priority: 26.11.2003 JP 2003396153
(43) Date of publication of application: 22.06.2005
(73) Proprietor: AISIN SEIKI KABUSHIKI KAISHA, Kariya-shi, Aichi-ken 448-8650 (JP)
(72) Inventor: Noda, Kohei c/o Int. Property Dept., Kariya-shi, Aichi-ken 448-8650 (JP); Kondoh, Yoshikazu, Kariya, Aichi, 448-8605 (JP)
(74) Representative: Marshall, John Grahame

(56) References cited:
- DE-A1- 19 928 951
- US-A- 4 451 887
- US-A- 4 811 226
- PATENT ABSTRACTS OF JAPAN vol. 2000, no. 13, 5 February 2001 (2001-02-05) -& JP 2000 280863 A (TOKAI RIKA CO LTD), 10 October 2000 (2000-10-10)

## Description

### FIELD OF THE INVENTION

The present invention relates to an automatic adjusting apparatus. More particularly, the present invention relates to an automatic adjusting apparatus for adjusting the height, sliding position and/or orientation of items of equipment in an automobile.

### BACKGROUND

The application concerns an automatic adjusting apparatus as described in US 4811226 A which corresponds to the preamble of claim 1.

It is a recent demand in the automobile industry to improve not only the fundamental and safety performance of automobiles but also their convenience of use. As a result automatic adjusting apparatus have been provided for adjusting the positioning of the adjustable equipment around the driver (e.g. the driver's seat, inside and outside rear view mirrors, the steering column).

According to the apparatus described in JP2000-280863A, once the positions of the adjustable equipment are set by the driver, the equipment is automatically adjusted or controlled without manual operation when the automobile recognises the driver, who has an electronically identified key. Furthermore, the equipment is automatically adjusted or controlled upon the driver entering or leaving the automobile so that the driver may get in or out the automobile more easily.

The driver usually benefits from this automatic adjusting apparatus, but the driver may still, from time to time, need to manually adjust the positions of some of the adjustable equipment. However, when the driver manually adjusts the seat position the mirrors will also need to be manually adjusted so that the driver maintains the best possible view in the mirrors.

### SUMMARY OF THE INVENTION

In light of the foregoing the present invention provides an automatic adjusting apparatus for co-ordinately adjusting the positioning of adjustable equipment of an automobile, having the features set out in claim 1.

### BRIEF DESCRIPTION OF THE DRAWINGS

The foregoing and additional features and characteristics of the present invention will become more apparent from the following detailed description when considered with reference to the accompanying drawings, wherein:
Fig. 1 shows some of the adjustable equipment in a typical automobile,
Fig. 2 is a block diagram of the electronic construction of the automatic adjusting apparatus;
Figs. 3a and 3b are flowcharts showing the operation of the automatic adjusting apparatus as executed by seat and mirror control units;
Figs. 4a and 4b are flowcharts showing a coordinated control as executed by the seat and mirror control units at the step S5 in Fig 3b.

### DETAILED DESCRIPTION

Embodiments of the present invention will be explained with reference to illustrations of the drawing figures as follows.

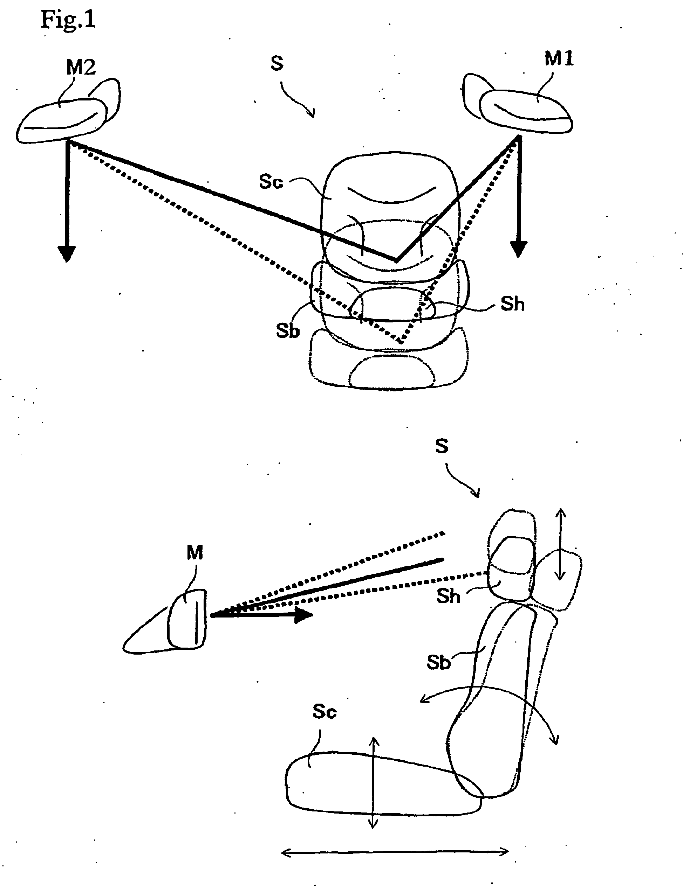

An automatic adjusting apparatus 10 adjusts the adjustable equipment of an automobile as shown in Fig 1., to improve convenience of use for the driver and passengers of the automobile. The adjustable equipment is, for example, the driver's seats, right and left outside mirrors M1 and M2 (outside mirrors), the inside rear view mirror M as well as the steering column and so on. The apparatus 10 performs the following two kinds of operation. Firstly, the eye position of the driver is presumed to be based upon on the driving position namely the sliding position of the seat S, the reclining angle of the seat back Sb, the height of the seat cushion Sc and the height of the headrest Sh as well as the direction of the inside rear view mirror M. The directions of the mirror faces of both outside mirrors M1 and M2 are automatically and co-ordinately adjusted with the adjustment of the seat position in consideration of the presumed eye position. Secondly, the eye position of the driver is presumed to be based upon the direction of the mirror faces of both outside mirrors M1 and M2 in the up/down direction. The presumed eye position represents a height of the headrest Sh, therefore the height of the headrest Sh is automatically and co-ordinately adjusted with the adjustment of the direction of the mirror faces of both outside mirrors M1 and M2 in consideration of the presumed eye position.

When the seat S is slid in the backward direction, the eye position of the driver tends to be moved backward and downward in relation to the direction of faces of the outside mirrors M1 and M2. Therefore, in the above situation the respective directions of the faces of both of the outside mirrors M1 and M2 are automatically adjusted outwards and downwards to correspond to the new presumed eye position.

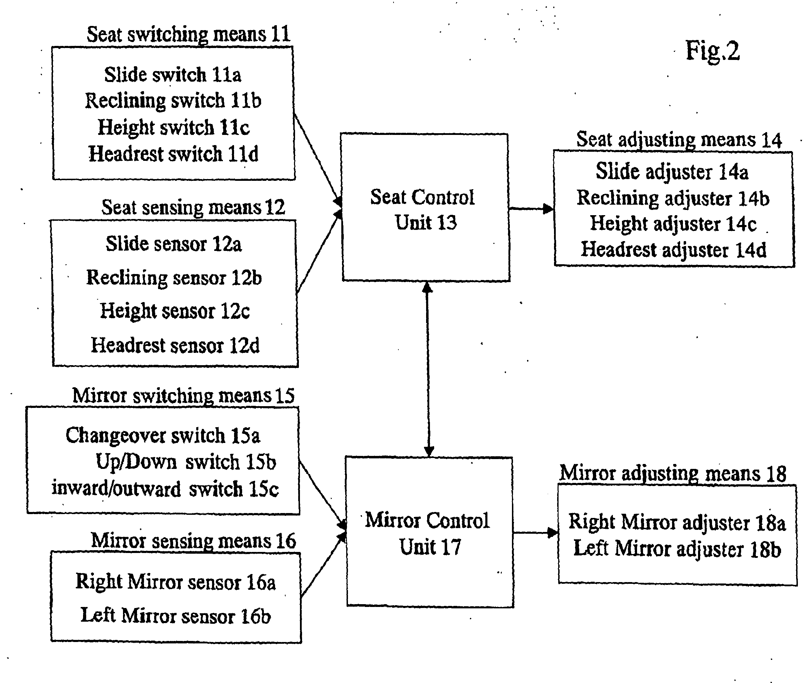

Fig.2 shows a block diagram of the electronic construction of the automatic adjusting apparatus 10. The apparatus 10 comprises a seat switching means (a first switch) 11 which may be manually operated to adjust the seat S, a seat sensing means 12, a seat control unit (a first control unit) 13 and a seat adjusting means (a first adjuster) 14, for adjusting the overall positioning of the seat S as well as a mirror switching means (a second switch) 15 which may be manually operated to adjust the direction of the mirror faces of the outside mirrors M1 and M2, a mirror sensing means 16, a mirror control unit (a second control unit) 17 and a mirror adjusting means (a second adjuster) 18, for adjusting the direction of the mirror faces of the outside mirrors M1 and M2.

The driver sitting on the seat S suitably adjusts the seat S with the seat switching means 11 according to his/her own physique. The seat switching means 11 includes a slide adjustment switch 11a for adjusting the forwards/backwards position of the seat S, a reclining adjustment switch 11b for adjusting the reclining angle of the seat back Sb, a height (lift) adjustment switch 11c for adjusting the height of the seat cushion Sc and a headrest adjustment switch for adjusting the height of the headrest Sh. The seat switching means 11 is connected to the seat control unit 13. The seat switching means 11 provides the seat control unit 13 with output signals from the four switches 11a, 11b, 11c and 11d when the seat switching means 11 is operated.

The seat sensing means 12 detects the overall positioning of the seat S and includes a slide sensor 12a for detecting the forwards/backwards position of the seat S, a reclining angle sensor 12b for detecting the reclining angle of the seat back Sb, a height (lift) sensor 12c for detecting the height of the seat cushion Sc and a headrest sensor 12d for detecting the height of the headrest Sh. The seat sensing means 12 is also connected to the seat control unit 13. The seat sensing means 12 provides the seat control unit 13 with output signals from each of the four sensors 12a, 12b, 12c and 12d when the seat S is adjusted.

The seat control unit 13 comprises a conventional CPU (not shown), EEPROM (not shown), various memories (not shown) as well as software to control the automatic adjustment. The original or starting positioning that is necessary for adjusting the seat S is memorized in the EEPROM. The software in the unit 13 carries out an operation to always recognize the overall positioning of the seat S within the adjustable range, based up on the output signals from the four sensors 12a, 12b, 12c and 12d and the original positioning.

The seat adjusting means 14 is provided in well-known manner (e.g. an electric motor, gears and shafts), and includes a slide adjuster 14a for adjusting the forwards/backwards position of the seat S, a reclining adjuster 14b for adjusting the reclining angle of the seat back Sb, a height (lift) adjuster 14c for adjusting the height of the seat cushion Sc and a headrest adjuster 14d for adjusting the height of the headrest Sh. The seat adjusting means 14 is connected to seat control unit 13. The seat control unit 13 controls the seat adjusting means 14 in a manner based upon the output signals from the seat switching means 11 and the seat sensing means 12, so that the overall positioning of the seat S is appropriately adjusted.

The driver sitting on the seat S may suitably adjust the direction of each mirror face of the outside mirrors M1 and M2 with the mirror switching means 15 according to his/her own eye position. The mirror switching means 15 includes a changeover switch 15a for selecting which of the right or left outside mirrors M1 and M2 is to be adjusted, an up/down adjustment switch 15b for adjusting the direction of each of the mirror faces in the up/down direction and a inward/outward adjustment switch 15c for adjusting the direction of each of the mirror faces in the inward/outward direction. The mirror switching means 15 is connected to the mirror control unit 17. The mirror switching means 15 provides the mirror control unit 17 with the three output signals, one from each the switches 15a, 15b and 15c, when the mirror switching means 15 is operated.

The mirror sensing means 16 detects the direction of each of the mirror faces of the outside mirrors M1 and M2 and includes a right mirror sensor 16a for detecting the direction of the mirror face of the right outside mirror M1 and a left mirror sensor 16b for detecting the direction of the mirror face of the left outside mirror M2. The mirror sensing means 16 is also connected to the mirror control unit 17. The mirror sensing means 16 provides the mirror control unit 17 with two output signals, one from each of the sensors 16a and 16b when the direction of the mirror faces of the outside mirrors M1 and M2 is adjusted. The direction of the mirror faces of the outside mirrors M1 and M2 is calculated in the mirror control unit 17 based on the signals from the mirror sensors 16a and 16b.

The mirror control unit 17 comprises a conventional CPU (not shown), EEPROM (not shown), various memories (not shown) as well as software to control the automatic adjustment. The mirror control unit 17 is connected to the seat control unit 13 so as to achieve mutual communication of information (e.g. information exchange of seat position data and mirror face direction data).

The mirror adjusting means 18 is provided in well-known manner (e.g. an electric motor, gears and shafts), and includes a right mirror adjuster 18a for adjusting the up/down and inward/outward direction of the mirror face of the right outside mirror M1 and a left mirror adjuster 18b for adjusting the up/down and inward/outward direction of the mirror face of the left outside mirror M2. The mirror adjusting means 18 is connected to the mirror control unit 17. The mirror control unit 17 operates the mirror adjusting means 18 based up on the output signals from the mirror switching means 15 and the mirror sensing means 16, so that the direction of each of the mirror faces of the outside mirrors M1 and M2 is appropriately adjusted.

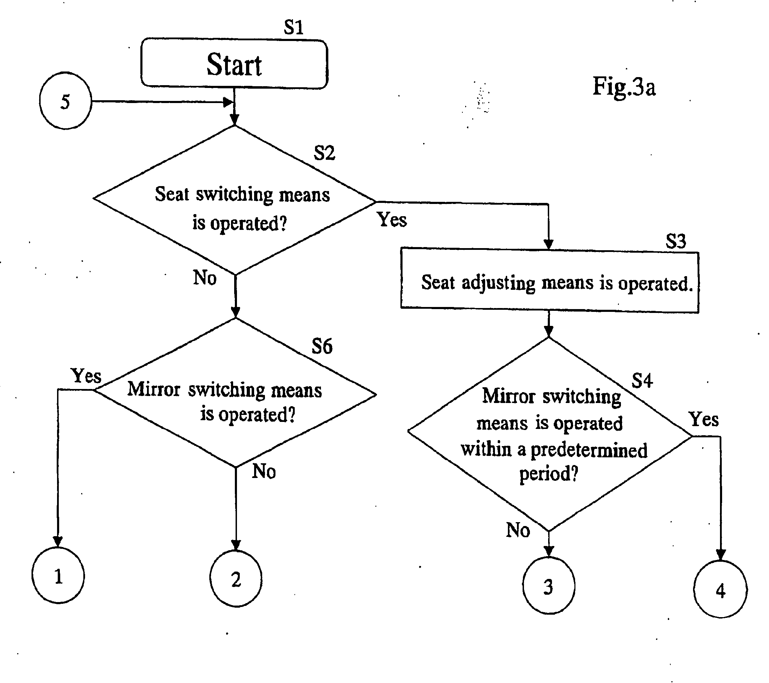

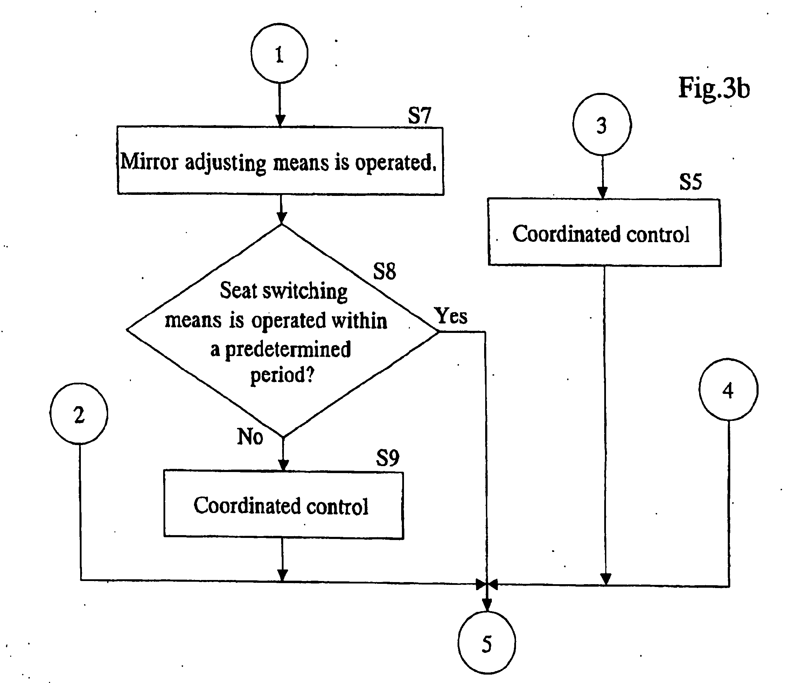

Referring to Figs. 3 through 5, the operation of the automatic adjustment carried out by the software in the seat control unit 13 is described, as follows:

In Figs. 3a and 3b, firstly the automatic adjusting means is activated, step S1. Next, the seat control unit 13 judges, step S2, whether an input signal is received from the seat switching means 11. In other words the seat control unit 13 judges at the step S2 whether the seat switching means 11 is manually operated. When the judgement at step S2 is affirmative, the seat control unit 13 operates the seat adjusting means 14 based on the input signal, step S3. The overall positioning of the seat S is, therefore, appropriately adjusted.

Next, in step S4, the seat control unit 13 judges whether an input signal is received from the mirror switching means 15 within a predetermined period (e.g. around 30 seconds) from when the input signal was received from the seat switching means 11. In other words the seat control unit 13 judges whether the mirror switching means 15 is manually operated within a predetermined period (e.g. around 30 seconds) from when the seat switching means 11 was operated. When the judgement at step S4 is negative the seat control unit 13 executes a coordinated control operation, step S5.

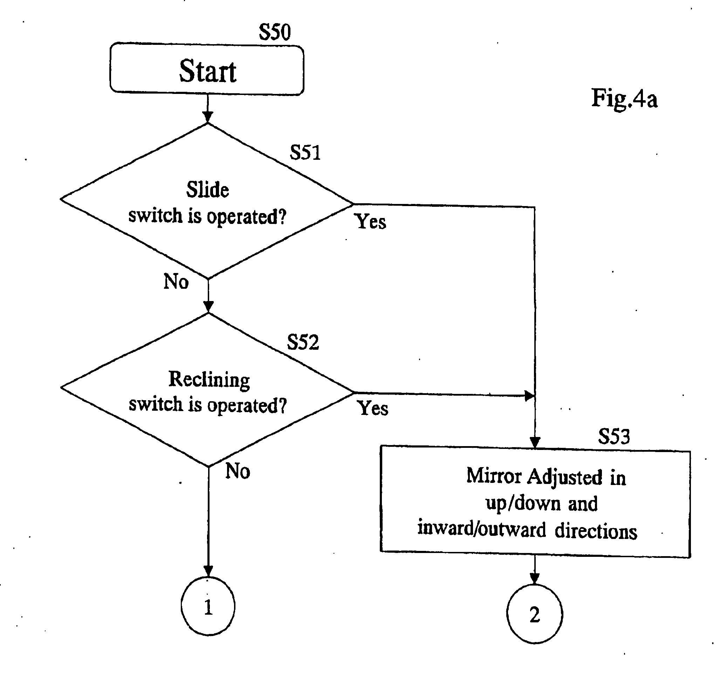

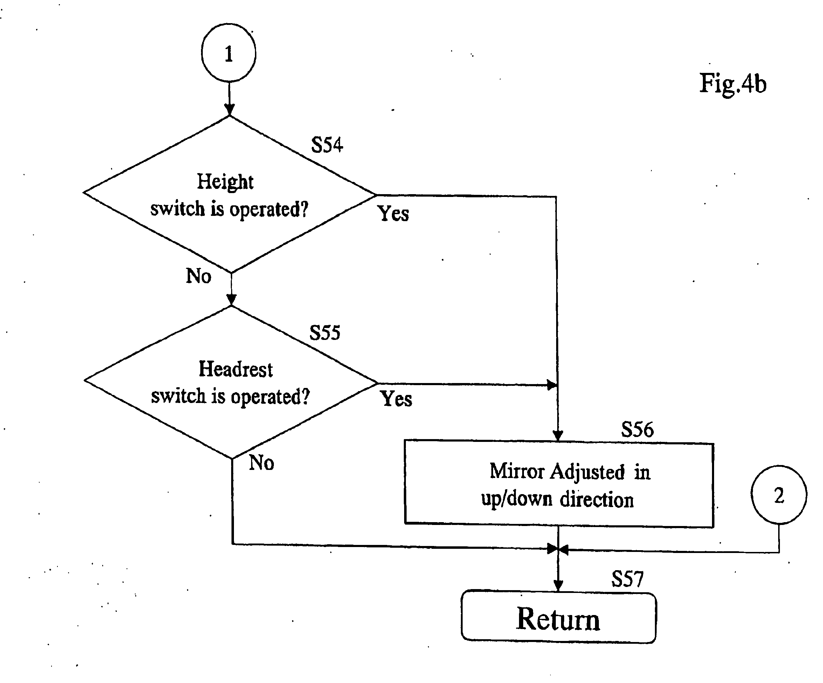

Referring to Figs. 4a and 4b, the coordinated control operation of step S5 is described, as follows:

According to the coordinated control operation of step S5, the mirror control unit 17 operates the mirror adjusting means 18 based on the seat adjusting operation of step S3. More specifically the mirror control unit 17 judges which direction the mirror faces of the outside mirrors M1 and M2 are to be adjusted in based upon at least one of input signals from the slide adjustment switch 11a, the reclining adjustment switch 11b, the height (lift) adjustment switch 11c and the headrest adjustment switch 11d. The direction of the mirror faces of the outside mirrors M1 and M2 are, therefore, appropriately adjusted.

In Figs. 4a and 4b, the coordinated control is executed at the step S50. At the step S51, the mirror control unit 17 judges whether the input signal received at step S1 is a signal from the slide adjustment switch 11a. In other words the mirror control unit 17 judges whether the slide adjustment switch 11a has been operated. When the judgement at step 51 is negative, the mirror control unit 17 judges, at step S52, whether the input signal received at step S1 is the signal from the reclining adjustment switch 11b. In other words the mirror control unit 17 judges whether the reclining adjustment switch 11b has been operated. When either the judgement at step S51 or the judgement at step S52 is affirmative, the mirror control unit 17 adjusts the up/down and inward/outward directions of the mirror faces of the outside mirrors M1 and M2 accordingly at step S53.

The seat control unit 13 contains a control map containing data on the overall positioning of the seat S and the direction of the mirror faces of each of the outside mirrors M1 and M2 within their respective adjustable ranges. The seat control unit 13 calculates the target direction of the mirror faces of the outside mirrors M1 and M2 based upon the seat adjusting operation of step S3 according to the control map. The seat control unit 13 provides the mirror control unit 17 with the target direction of the mirror faces, so that the mirror control unit 17 operates the mirror adjusting means 18 based on these target directions. In other words, each of the right/left mirror adjusters 18a/18b are operated so as adjust the up/down and inward/outward direction each of the mirror faces of the outside mirrors M1 and M2 to the target directions. The adjusting operation of step S53 is then completed and the coordinated control is terminated at step S57.

When the judgement is negative at step S52, the mirror control unit 17 judges at step S54 whether the input signal received at step S1 is a signal from the height adjustment switch 11c. In other words the mirror control unit 17 judges whether the height adjustment switch 11c has been operated. When the judgement is negative at step S54, the mirror control unit 17 judges at step S55 whether the input signal received at step S1 is a signal from the headrest adjustment switch 11d. In other words, the mirror control unit 17 judges whether headrest adjustment switch 11d has been operated. When either the judgement at step S54 or the judgement at step S52 is affirmative, the mirror control unit 17 adjusts the up/down direction of the mirror faces of the outside mirrors M1 and M2 at step S56.

The seat control unit 13 calculates the target direction of the mirror faces of the outside mirrors M1 and M2 from the control map based upon the seat adjusting operation of step S3. The seat control unit 13 provides the mirror control unit 17 with the target directions for the mirror faces, so that the mirror control unit 17 operates the mirror adjusting means 18 based on these target directions. In other words, each of the right and left mirror adjusting means 18a and18b is operated so as adjust the direction of the mirror faces of the outside mirrors M1 and M2 in the up/down direction. The mirror adjusting operation of step S53 is then completed and the coordinated control is terminated at step S57.

When the judgement at step 55 is negative, the coordinated control is terminated at step S57.

Referring to Figs. 3a and 3b, when the judgement is affirmative at step S4, the automatic adjustment operation returns to step S2. The mirror control unit 17 will have operated the mirror adjusting means 18 independently of the seat adjusting operation of the step S3. When the coordinated control of step S5 is terminated, the automatic adjustment operation returns to step S2. On the latter occasion, when the seat switching means 11 is further operated within a predetermined period after the coordinated control of step S5, the seat control unit 13 does not co-ordinately adjust the directions of mirror faces of the outside mirrors M1 and M2.

When the judgement at step S2 is negative, the mirror control unit 17 judges, at step S6, whether an input signal is received from the mirror switching means 15. In other words, at step S6 the mirror control unit 17 judges whether the mirror switching means 15 has been operated. When the judgement at step S6 is affirmative, the mirror control unit 17 operates the mirror adjusting means 18 based upon the input signal, step S7. The direction of the mirror faces of the outside mirrors M1 and M2 is, therefore, appropriately adjusted.

Next, at step S8 the mirror control unit 17 judges whether an input signal is received from the seat switching means 11 within a predetermined period (e.g. around 30 seconds) from when the input signal is received from the mirror switching means 15. In other words the mirror control unit 17 judges whether the seat switching means 11 is operated within a predetermined period (e.g. around 30 seconds) from when the mirror switching means 15 was operated. When the judgement at step S8 is negative, the mirror control unit 17 executes a coordinated control, step S9.

The coordinated control of step S9 is described, as follows:

According to the coordinated control of step S9, the seat control unit 13 operates the seat adjusting means 14 based upon the mirror adjusting operation of step S7. More specifically the seat control unit 13 operates the height adjuster 14d of the seat adjusting means 14 in a manner based upon the up/down adjusting operation executed at step S7. The height of the headrest is, therefore, appropriately adjusted.

The execution of this coordinated control is as follows, making reference to steps S91 to S94, not illustrated in the drawings. At step S91, the mirror control unit 17 judges whether a predetermined period (e.g. around 5 seconds) has passed since the direction of the mirror face of one of the mirrors M1 and M2 was adjusted. When the judgement at step 91 is negative, the mirror control unit 17 judges, at step S92, whether both of the outside mirrors M1 and M2 were equally adjusted in the up/down direction. In other words, at step S92, the mirror control unit 17 judges whether the direction of the mirror face of the right outside mirror M1 is the same as the direction of the mirror face of the left outside mirror M2 in the up/down direction.

When either the judgement at step S91 or the judgement at step S92 is affirmative, the seat control unit 13 adjusts the height of the headrest at step S93 accordingly.

The mirror control unit 17 provides the seat control unit 13 with position data representing the adjusted direction of the mirror faces of the outside mirrors M1 and M2 as produced at step S7. The seat control unit 13 calculates the target height for the headrest Sh based upon the position data in the control map. The seat control unit 13 operates the headrest adjuster 14d to adjust the height of the headrest to this target height. The height adjusting operation of step S93 is then complete and the coordinated control is terminated at step S94.

When the judgement at step S92 is negative the coordinated control of step S9 returns to step S91.

When the judgement at step S8 is affirmative, the automatic adjustment operation returns to step S2. The seat control unit 13 will have operated the seat adjusting means 14 independently of the mirror adjusting operation of step S7. When the coordinated control of step S9 is terminated the automatic adjustment operation returns to step S2. In the latter case, when the mirror switching means 15 is further operated within a predetermined period after the coordinated control of step S9, the mirror control unit 17 does not co-ordinately adjust the overall positioning of the seat S.

As described above, the seat control unit 13 and the mirror control unit 17 coordinately adjust both the overall positioning of the seat S and the direction of the mirror faces of the mirrors M1 and M2, at steps S3 and S5 (S53 and S56) as well as at steps S7 and S9 (S93). It is therefore not necessary to manually adjust the seat position and the direction of the mirror faces, separately. In other words, the driver is prevented from forgetting to adjust either of the seat positioning or the direction of the mirror faces when the other of them is adjusted. Thus, the automatic adjusting apparatus ensures the driver always has the best view in the mirrors and thereby ensures a safe driving position.

## Claims

1. An automatic adjusting apparatus for co-ordinately adjusting the positioning of adjustable equipment of an automobile comprising:
a first switching means (11) which may be manually operated to adjust the positioning of a first item or first set of items of adjustable equipment,
a first adjusting means (14) or adjusting the positioning of the first item or first set of items;
a first control unit (13) to operate the first adjusting means (14) based upon the operation of the first switching means (11),
a second switching means (15) which may be manually operated to adjust the positioning of a second item or second set of items of adjustable equipment,
a second adjusting means (18) for adjusting the position of the second item or second set of items and
a second control unit (17) to operate the second adjusting means (18) based upon the operation of the second switching means (15);
**characterized in that** the second control unit (17) co-ordinately operates the second adjusting means (18) in a manner dependent upon the adjusting operation of the first control unit (13) when the second switching means (15) is not manually operated within a predetermined period from when the first switching means (11) is manually operated.

2. An automatic adjusting apparatus according to claim 1, wherein the second control unit (17) co-ordinately operates the second adjusting means (18) in a manner independent of the adjusting operation of the first control unit (13) when the second switching means (15) is manually operated within a predetermined period from when the first switching means (11) manually is operated.

3. An automatic adjusting apparatus according to either claim 1 or claim 2, wherein the first control unit (13) co-ordinately operates the first adjusting means (14), in a manner dependent upon the adjusting operation of the second control unit (17) when the first switching means (11) is not manually operated within a predetermined period from when the second switching means (15) is manually operated.

4. An automatic adjusting apparatus according to any preceding claim, wherein the first control unit (13) co-ordinately operates the first adjusting means (14) in a manner independent of the adjusting operation of the second control unit (17) when the first switching means (11) is manually operated within a predetermined period from when the second switching means (15) is manually operated.

5. An automatic adjusting apparatus according to any preceding claim, wherein the first switching means (11) is a seat switching means, the first control unit (13) is a seat control unit, the first adjusting means (14) is a seat adjusting means, the first item is the driver's seat of the automobile, the second switching means (15) is a mirror switching means, the second control unit (17) is a mirror control unit, the second adjusting means (18) is a mirror adjusting means and the second item or second set of items are one or more rear view mirrors.

6. An automatic adjusting apparatus according to claim 5, wherein the seat switching means (11) includes a slide switch (14a) for adjusting the forwards/backwards position of the seat, a reclining switch (14b) for adjusting the reclining angle of the seat's back, a height switch (14c) for adjusting the height of the seat's cushion and a headrest switch (14d) for adjusting the height of the seat's headrest.

7. An automatic adjusting apparatus according to claim 6, wherein the mirror control unit (17) operates the mirror adjusting means (18a) to adjust the up/down and inward/outward direction of the mirror face of one or more of the rear view mirrors when the mirror switching means (15) is not operated within a predetermined period of either the slide switch (14a) or the reclining switch (14b) being operated.

8. An automatic adjusting apparatus according to either claim 6 or claim 7, wherein the mirror control unit (17) operates the mirror adjusting means (18) to adjust the up/down direction of the mirror face of one or more rear view mirrors when the mirror switching means (15) is not operated within a predetermined period of either the height switch (14c) or the headrest switch (14d) being operated.

9. An automatic adjusting apparatus according to one of claims 5 to claim 8, wherein the seat control unit (13) operates the seat adjusting means (14) to adjust the height of the headrest when either a predetermined period has passed after the direction of the mirror face of one or more of the rear view mirrors was manually adjusted or both outside rear view mirrors were equally adjusted in the up/down direction.

## Patentansprüche

1. Automatisches Einstellgerät zum koordinierten Einstellen der Positionierung einer einstellbaren Ausrüstung eines Automobils mit
einer ersten Schalteinrichtung (11), die manuell betätigt werden kann, um die Positionierung eines ersten Gegenstands oder einer ersten Gruppe von Gegenständen einer einstellbaren Ausrüstung einzustellen;
einer ersten Einstelleinrichtung (14) zum Einstellen der Positionierung des ersten Gegenstands oder der ersten Gruppe von Gegenständen;
einer erste Steuereinheit (13), um die erste Einstelleinrichtung (14) basierend auf der Betätigung der ersten Schalteinrichtung (11) zu betätigen;
einer zweite Schalteinrichtung (15), die manuell betätigt werden kann, um die Positionierung eines zweiten Gegenstands oder einer zweiten Gruppe von Gegenständen einer einstellbaren Ausrüstung einzustellen;
einer zweiten Einstelleinrichtung (18) zum Einstellen der Position des zweiten Gegenstands oder der zweiten Gruppe von Gegenständen; und
einer zweiten Steuereinheit (17), um die zweite Einstelleinrichtung (18) basierend auf der Betätigung der zweiten Schalteinrichtung (15) zu betätigen;
**dadurch gekennzeichnet, dass**
die zweite Steuereinheit (17) die zweite Einstelleinrichtung (18) in einer Weise abhängig von der Einstellbetätigung der ersten Steuereinheit (13) koordiniert betätigt, wenn die zweite Schalteinrichtung (15) innerhalb einer vorbestimmten Dauer, von der an die erste Schalteinrichtung (11) manuell betätigt wurde, nicht manuell betätigt wird.

2. Automatisches Einstellgerät gemäß Anspruch 1, wobei die zweite Steuereinheit (17) die zweite Einstelleinrichtung (18) in einer Weise unabhängig von der Einstellbetätigung der ersten Steuereinheit (13) koordiniert betätigt, wenn die zweite Schalteinrichtung (15) innerhalb einer vorbestimmten Dauer, von der an die erste Schalteinrichtung (11) manuell betätigt wurde, manuell betätigt wird.

3. Automatisches Einstellgerät gemäß entweder Anspruch 1 oder Anspruch 2, wobei die erste Steuereinheit (13) die erste Einstelleinrichtung (14) in einer Weise abhängig von der Einstellbetätigung der zweiten Steuereinheit (17) koordiniert betätigt, wenn die erste Schalteinrichtung (11) innerhalb einer vorbestimmten Dauer, von der an die zweite Schalteinrichtung (15) manuell betätigt wurde, nicht koordiniert betätigt wird.

4. Automatisches Einstellgerät gemäß irgendeinem vorhergehenden Anspruch, wobei die erste Steuereinheit (13) die erste Einstelleinrichtung (14) in einer Weise unabhängig von der Einstellbetätigung der zweiten Steuereinheit (17) koordiniert betätigt, wenn die erste Schalteinrichtung (11) innerhalb einer vorbestimmten Dauer, von der an die zweite Schalteinrichtung (15) manuell betätigt wurde, manuell betätigt wird.

5. Automatisches Einstellgerät gemäß irgendeinem vorhergehenden Anspruch, wobei die erste Schalteinrichtung (11) eine Sitzschalteinrichtung ist, die erste Steuereinheit (13) eine Sitzsteuereinheit ist, die erste Einstelleinrichtung (14) eine Sitzeinstelleinrichtung ist, der erste Gegenstand der Fahrersitz des Automobils ist, die zweite Schalteinrichtung (15) eine Spiegelschalteinrichtung ist, die zweite Steuereinheit (17) eine Spiegelsteuereinheit ist, die zweite Einstelleinrichtung (18) eine Spiegeleinstelleinrichtung ist und der zweite Gegenstand oder die zweite Gruppe von Gegenständen ein oder mehrere Rückspiegel ist/sind.

6. Automatisches Einstellgerät gemäß Anspruch 5, wobei die Sitzschalteinrichtung (11) einen Gleitschalter (14a) zum Einstellen der Vorwärts-/Rückwärtsposition des Sitzes, einen Lehnenschalter (14b) zum Einstellen des Lehnenwinkels der Lehne eines Sitzes, einen Höhenschalter (14c) zum Einstellen der Höhe des Sitzkissens, und einen Kopfstützenschalter (14d) zum Einstellen der Höhe der Kopfstütze des Sitzes aufweist.

7. Automatisches Einstellgerät gemäß Anspruch 6, wobei die Spiegelsteuereinheit (17) die Spiegeleinstelleinrichtung (18) betätigt, um die Richtung nach oben/unten und nach innen/außen der Spiegelflächen von einem oder mehreren von den Rückspiegeln einzustellen, wenn die Spiegelschalteinrichtung (15) innerhalb einer vorbestimmten Dauer, von der an entweder der Gleitschalter (14a) oder der Lehnenschalter (14b) betätigt wird, nicht betätigt wird.

8. Automatisches Einstellgerät gemäß entweder Anspruch 6 oder Anspruch 7, wobei die Spiegelsteuereinheit (17) die Spiegeleinstelleinrichtung (18) betätigt, um die Richtung nach oben/unten der Spiegelfläche von einem oder mehreren von den Rückspiegeln zu betätigen, wenn die Spiegelschalteinrichtung (15) innerhalb einer vorbestimmten Dauer, von der an entweder der Höhenschalter (14c) oder der Kopfstützenschalter (14d) betätigt wird, nicht betätigt wird.

9. Automatisches Einstellgerät gemäß einem der Ansprüche 5 bis 8, wobei die Sitzsteuereinheit (13) die Sitzeinstelleinrichtung (14) betätigt, um die Höhe der Kopfstütze einzustellen, wenn entweder eine vorbestimmter Dauer abgelaufen ist, nach der die Richtung der Spiegelfläche von einem oder mehreren von den Rückspiegeln manuell eingestellt wurde, oder beide Außenrückspiegel gleichmäßig in der Richtung nach oben/unten eingestellt wurden.

## Revendications

1. Dispositif de réglage automatique permettant de régler de manière coordonnée le positionnement d'équipements réglables d'une automobile qui comprend :
un premier moyen de commutation (11), qui peut être actionné manuellement pour régler le positionnement d'un premier élément ou d'un premier ensemble d'éléments d'équipements réglables,
un premier moyen de réglage (14) permettant de régler le positionnement du premier élément ou du premier ensemble d'éléments,
une première unité de commande (13) pour actionner le premier moyen de réglage (14) par l'actionnement du premier moyen de commutation (11),
un second moyen de commutation (15) qui peut être actionné manuellement pour régler le positionnement d'un second élément ou d'un second ensemble d'éléments d'équipements réglables,
un second moyen de réglage (18) permettant de régler le positionnement du second élément ou du second ensemble d'éléments et,
une seconde unité de commande (17) pour actionner le second moyen de réglage (18) par l'actionnement du second moyen de commutation (15);
**caractérisé en ce que** la seconde unité de commande (17) actionne de manière coordonnée le second moyen de réglage (18) en fonction de l'actionnement de la première unité de commande (13) lorsque le second moyen de commutation (15) n'est pas actionné manuellement dans une période prédéterminée à partir de laquelle le premier moyen de commutation (11) est actionné manuellement.

2. Dispositif de réglage automatique selon la revendication 1, dans lequel la seconde unité de commande (17) actionne de manière coordonnée le second moyen de réglage (18) indépendamment de l'actionnement de la première unité de commande (13) lorsque le second moyen de commutation (15) est actionné manuellement dans une période prédéterminée à partir de laquelle le premier moyen de commutation (11) est actionné manuellement.

3. Dispositif de réglage automatique selon la revendication 1 ou 2, dans lequel la première unité de commande (13) actionne de manière coordonnée le premier moyen de réglage (14) en fonction de l'actionnement de la seconde unité de commande (17) lorsque le premier moyen de commutation (11) n'est pas actionné manuellement dans une période prédéterminée à partir de laquelle le second moyen de commutation (15) est actionné manuellement.

4. Dispositif de réglage automatique selon l'une quelconque des revendications précédentes, dans lequel la première, unité de commande (13) actionne de manière coordonnée le premier moyen de réglage (14) indépendamment de l'actionnement de la seconde unité de commande (17) lorsque le premier moyen de commutation (11) est actionné manuellement dans une période prédéterminée à partir de laquelle le second moyen de commutation (15) est actionné manuellement.

5. Dispositif de réglage automatique selon l'une quelconque des revendications précédentes, dans lequel le premier moyen de commutation (11) est un moyen de commutation de siège, la première unité de commande (12) est une unité de commande de siège, le premier moyen de réglage (14) est un moyen de réglage de siège, le premier élément est le siège conducteur de l'automobile, le second moyen de commutation (15) est un moyen de commutation de rétroviseur, la seconde unité de commande (17) est une unité de commande de rétroviseur, le second moyen de réglage (18) est un moyen de réglage de rétroviseur et le second élément ou second ensemble d'éléments est un ou plusieurs rétroviseur(s).

6. Dispositif de réglage automatique selon la revendication 5, dans lequel le moyen de commutation de siège (11) inclut un commutateur de coulissement (14a) permettant de régler la position vers l'avant/l'arrière du siège, un commutateur d'inclinaison (14b) permettant de régler l'angle d'inclinaison du dossier du siège, un commutateur de hauteur (14c) permettant de régler la hauteur du coussin de siège et un commutateur d'appui-tête (14d) permettant de régler la hauteur de l'appui-tête du siège.

7. Dispositif de réglage automatique selon la revendication 6, dans lequel l'unité de commande de rétroviseur (17) actionne le moyen de réglage du rétroviseur (18a) pour régler le miroir d'un ou plusieurs rétroviseur(s) vers le haut/bas et vers l'intérieur/l'extérieur lorsque le moyen de commutation de rétroviseur (15) n'est pas actionné pendant une période prédéterminée au cours de laquelle le commutateur de coulissement (14a) ou le commutateur d'inclinaison (14b) est actionné.

8. Dispositif de réglage automatique selon la revendication 6 ou 7, dans lequel l'unité de commande de rétroviseur (17) actionne le moyen de réglage de rétroviseur (18) pour régler le miroir d'un ou plusieurs rétroviseur (s) vers le haut/bas lorsque le moyen de commutation de rétroviseur (15) n'est pas actionné pendant une période prédéterminée au cours de laquelle le commutateur de hauteur (14c) ou le commutateur d'appui-tête (14d) est actionné.

9. Dispositif de réglage automatique selon l'une des revendications 5 à 8, dans lequel l'unité de commande de siège (13) actionne le moyen de réglage de siège (14) pour régler la hauteur de l'appui-tête après une période prédéterminée suivant le réglage manuel du miroir d'un ou plusieurs rétroviseur(s) ou le réglage à l'identique vers le haut/bas des deux rétroviseurs extérieurs.
